(19) Europäisches Patentamt
European Patent Office
Office européen des brevets

(11) EP 0 777 340 A2

(12) EUROPÄISCHE PATENTANMELDUNG

(43) Veröffentlichungstag:
04.06.1997 Patentblatt 1997/23

(51) Int. Cl.⁶: H04B 3/23

(21) Anmeldenummer: 96118714.3

(22) Anmeldetag: 21.11.1996



(84) Benannte Vertragsstaaten:
DE ES FR GB IT SE

(30) Priorität: 29.11.1995 DE 19544541

(71) Anmelder: SIEMENS AKTIENGESELLSCHAFT
80333 München (DE)

(72) Erfinder:
• Pillekamp, Klaus-Dieter, Dipl.-Ing.
40699 Erkrath (DE)
• Ostermöller, Michael
49214 Bad Rothenfelde (DE)
• Underbrink, Hartmut
49186 Bad Iburg (DE)

(54) **Verfahren und Einrichtung zur Echokompensation in Telefonanlagen**

(57) Zur Echokompensation in insbesondere nach dem DECT-Standard arbeitenden Telefonanlagen wird in der Gabelschaltung (G) eine an den benutzten Verbindungsweg angepaßte Nachbildung (Nb) eingestellt, die aus einer Vielzahl von vorbereiteten und unterschiedliche Leitungsverhalten simulierenden Nachbildungen ausgewählt wird. Das Verhalten der jeweils angeschlossenen Amtsleitung (AL) wird nach Gesprächsaufbau erkannt, indem diskrete Frequenzen aus dem Sprachfrequenzbereich in den Sendeweg eingespeist und deren Rückflußpegel gemessen werden. Dann wird diejenige der simulierenden Nachbildungen eingestellt, deren im Rahmen der Vorbereitung ermittelten und abgelegten Referenz-Rückflußpegel am besten mit den tatsächlich gemessenen Rückflußpegeln übereinstimmen. Die Erfindung ist hauptsächlich zur Anwendung bei digital arbeitenden Schnurlos-Telefonanlagen, insbesondere nach dem DECT-Standard, geeignet.

FIG 4

**Beschreibung**

Die Erfindung bezieht sich auf ein Verfahren zur Echokompensation in Telefonanlagen gemäß dem Oberbegriff des Patentanspruchs 1.

Darüber hinaus bezieht sich die Erfindung auf eine Einrichtung zur Echokompensation in Telefonanlagen gemäß dem Oberbegriff des Patentanspruchs 10.

Bei elektronischen Telekommunikationseinrichtungen entstehen an Übertragungsübergängen Reflexionen, die der sendende Kommunikationspartner in seinem eigenen Handapparat hört. Das Wahrnehmen der eigenen Sprache ist in der Regel nicht störend und sogar erwünscht, da sich der Mensch beim normalen Sprechen auch selbst über die Luft hört. Es wird in Telefonen durch Rückhörwiderstände oder antiparallel geschaltete Dioden erzeugt, die durch ihre Funktion den Eindruck eines intakten Apparates vermitteln. Verstreicht aber zwischen dem Absenden und dem Wahrnehmen eines Signals eine zu lange Zeit, so wirkt sich das Rückhören als Echo aus und erschwert die Verständigung. Solche Zeitverzögerungen treten verstärkt bei der modernen digitalen Übertragungstechnik auf, da die digitalen Signale aus analogen gewonnen werden müssen und vor ihrer Übertragung zu verarbeiten sind, um eine Datenreduktion zu erreichen. Die Schnittstellen der Sprachübertragung sind daher die Ursachen der Echos in Kommunikationseinrichtungen. Bei Telefonsystemen bestehen diese Übergänge oft aus Gabelschaltungen.

Im Normalfall muß für die Übertragung von Sprache ein Sende- und ein Empfangsweg vorhanden sein. Da diese doppelpaarige Aderführung aber für eine flächendeckende Netzinstallation nicht wirtschaftlich ist, werden außerhalb der Vermittlungsstellen nur Zweidrahtverbindungen geschaltet. Für Signalverstärkungen muß allerdings eine vierdrähtige Verbindung vorhanden sein, da ein Verstärker nur in einer Richtung betrieben werden kann. Daraus folgt, daß eine Möglichkeit geschaffen werden muß, um die zwei- und vierdrähtigen Leitungen miteinander zu verbinden. Diese Schaltung wird in der Fernmeldetechnik als Gabelschaltung bezeichnet.

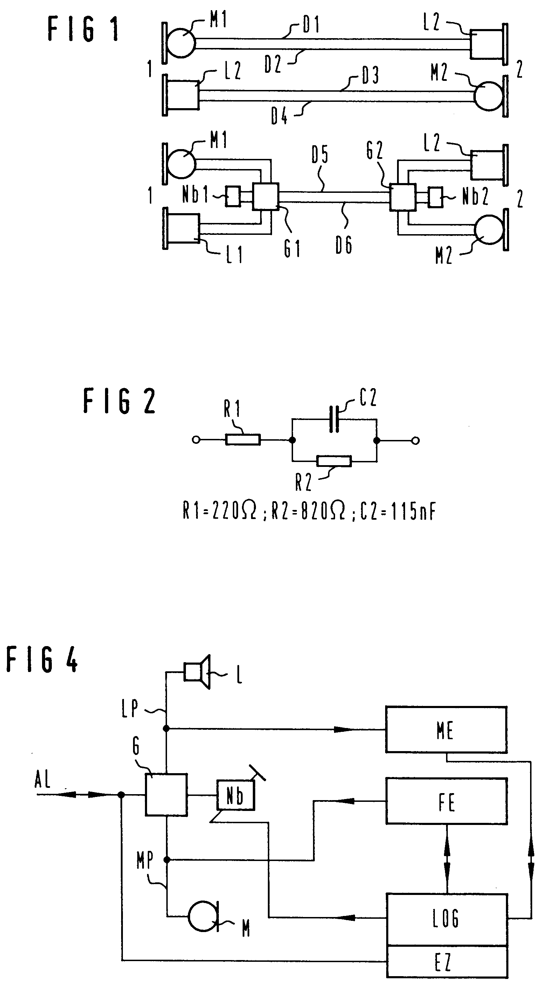

Fig. 1 zeigt den Zusammenhang zwischen Zweidraht- und Vierdrahttechnik. Hierin stehen zwei Sprechstellen 1 und 2 miteinander in Verbindung, wobei im oben dargestellten Vierdraht-Verbindungsfall zwei Drähte D1 und D2 das Mikrofon M1 der Sprechstelle 1 mit dem Lautsprecher L2 der Sprechstelle 2 und zwei weitere Drähte D3 und D4 das Mikrofon M2 der Sprechstelle 2 mit dem Lautsprecher L1 der Sprechstelle 1 direkt verbinden. Dagegen ist im darunter dargestellten Zweidraht-Verbindungsfall die Sprechstelle 1 mit der Sprechstelle 2 nur über zwei Drähte D5 und D6 verbunden. Um diese wirtschaftlichere Zweidrahtverbindungsweise realisieren zu können, enthalten die Sprechstellen 1 und 2 jeweils eine Gabelschaltung G1 bzw. G2 mit einer impedanzmäßigen Nachbildung Nb1 bzw. Nb2 der Zweidrahtverbindungsleitung D5, D6. In der Sprechstelle 1 sind das Mikrofon M1 und der Lautsprecher L1 jeweils über eine Zweidraht-Leitung mit der Gabelschaltung G1 und in der Sprechstelle 2 das Mikrofon M2 und der Lautsprecher L2 ebenfalls jeweils über eine Zweidraht-Leitung mit der dortigen Gabelschaltung G2 verbunden.

Die ursprüngliche Form der Gabelschaltung ist eine durch Übertrager aufgebaute Torschaltung. Sie trennt den Übertragungsweg in Sende- und Empfangsweg. Da Gabelschaltungen mit Übertragern hohe Kosten verursachen und große Abmessungen haben, werden heute andere Formen der Gabelschaltung eingesetzt, nämlich Wheatstone-Brücken und elektronische Gabelschaltungen (Stromquelleneinspeisung). Allgemein entstehen an einer Gabelschaltung verschiedene Dämpfungen, nämlich die Betriebsdämpfung in Senderichtung, die Betriebsdämpfung in Empfangsrichtung, die Gabelübergangsdämpfung und die Nachbildfehlerdämpfung, die sich ergibt, indem man die Betriebsdämpfungen von der Gabelübergangsdämpfung subtrahiert. Optimale Übertragungsverhältnisse bei Gabelschaltungen ergeben sich, wenn die Nachbildung die gleiche Impedanz wie die angeschlossene Zweidrahtleitung besitzt. Da sich aber das Leitungsverhalten von Gespräch zu Gespräch verändert, ist es mit einer einzigen Nachbildung nicht möglich, die optimale Anpassung einer Gabel in Telefonanlagen zu erreichen. Durch diese Fehlanpassung entstehen Reflexionen an der Gabel, weil ein Teil der Energie des Sendesignals in den Empfangspfad überkoppelt. Bei herkömmlichen Telefonen wirkt sich diese Fehlanpassung nicht sehr störend aus, da dort so gut wie keine Laufzeit zwischen Mikrofon und Hörkapsel auftritt. Aus diesem Grund ist für solche Geräte eine feste Nachbildung in Form von $Z_{Nb} = Z_{ref}$ gewählt, die Fig. 2 zeigt. Diese feste Nachbildung besteht aus einem Widerstand R1 und in Reihe dazu aus der Parallelschaltung eines Widerstands R2 und eines Kondensators C2. Die Bauteilwerte sind R1=220 Ω, R2=820 Ω und C2=115 nF. Diese Nachbildung ermöglicht bei einfachen Telefonapparaten eine hinreichend gute Kommunikation, da sie ein Mittel aller Anschlußleitungen darstellt. Bei Telekommunikationsanlagen, die Laufzeiten in Sende- und Empfangspfad aufweisen, lassen sich mit dieser Art der Nachbildung keine guten Ergebnisse erzielen, da sich die Reflexionen an der Gabel zu Echos entwickeln.

Der Erfindung liegt die Aufgabe zugrunde, ein Verfahren zur Echokompensation in solchen Telefonanlagen, welche die Kommunikation störende Laufzeiten in Sende- und Empfangspfad aufweisen, zu schaffen, so daß Reflexionen an der Gabelschaltung minimiert werden und damit eine Überkopplung von Signalen vom Sende- in den Empfangspfad vermindert wird.

Diese Aufgabe wird bei einem gattungsgemäßen Verfahren durch die im kennzeichnenden Teil des Patentanspruchs 1 angegebenen Merkmale gelöst.

Zweckmäßige und vorteilhafte Weiterbildungen des erfindungsgemäßen Verfahrens sind in den Ansprüchen 2 bis 11 angegeben.

Durch die Erfindung soll auch eine Einrichtung zur Echokompensation in solchen Telefonanlagen, welche die Kommunikation störende Laufzeiten in Sende- und Empfangspfad aufweisen, geschaffen werden, so daß Reflexionen an der Gabelschaltung minimiert werden und damit eine Überkopplung von Signalen vom Sende- in den Empfangspfad vermindert wird.

Diese Aufgabe wird bei einer Einrichtung gemäß dem Oberbegriff des Patentanspruchs 13 durch die im kennzeichnenden Teil dieses Anspruchs angegebenen Merkmale gelöst.

Zweckmäßige und vorteilhafte Weiterbildungen der erfindungsgemäßen Einrichtung sind in den Ansprüchen 14 bis 18 angegeben.

Von besonderer Bedeutung ist die Anwendung der Erfindung in Basisstationen von schnurlosen Telefonanlagen mit digitaler Signalübertragung zwischen Basisstation und Mobilteilen. Dabei kommen insbesondere solche schnurlosen digitalen Telefonanlagen in Betracht, die nach dem sogenannten DECT(Digital European Cordless Telecommunication)-Standard arbeiten. DECT-Telefonanlagen sind beispielsweise im Aufsatz "DECT - Gespräche im Zeitschlitz" in der Zeitschrift "Funkschau", Heft 11, 1995, Seiten 40 bis 43 abgehandelt.

Die Erfindung wird im folgenden im Rahmen einer Anwendung bei einer nach dem DECT-Standard arbeitenden schnurlosen Telefonanlage anhand von Zeichnungen erläutert. Es zeigen:

Fig. 1    die bereits beschriebene schematische Darstellung eines Zweidraht- und eines Vierdraht-Übertragungsweges,

Fig. 2    die bereits beschriebene Darstellung der festen Nachbildung $Z_{ref}$,

Fig. 3    das Blockschaltbild einer DECT-Telefonanlage mit einer Basisstation und mehreren Mobilteilen, und

Fig. 4    das Prinzipblockschaltbild einer entsprechend der Erfindung arbeitenden adaptiven Gabelschaltung.

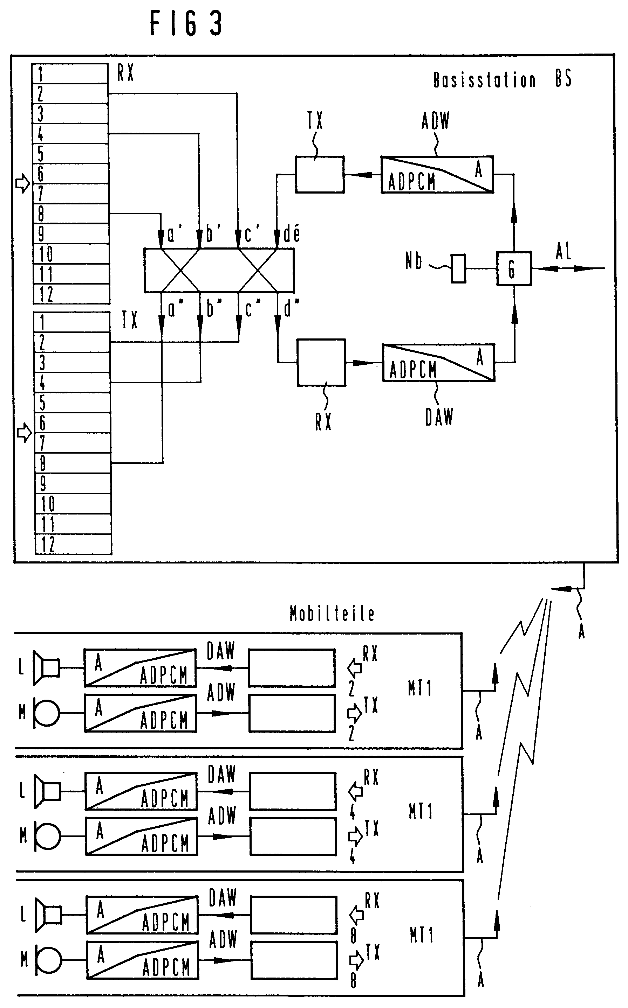

In Fig. 3 ist das Blockschaltbild einer DECT-Telefonanlage dargestellt, wobei in dieser Figur oben das Schema einer Basisstation BS und darunter die Schemata dreier Mobilteile MT1, MT2 und MT3 gezeigt sind. Der DECT-Standard ist eine neue Kommunikationstechnologie, die es ermöglicht, auf eine Kabelinstallation zu verzichten. Er ist extrem abhörsicher. Es wird mit einer Leistung von ca. 250 mWatt gesendet. Dabei stehen 120 Kanäle für die Übertragung von Informationen zur Verfügung. Ein wesentlicher Vorteil dieser Technik ist es, daß für diese 120 Kanäle nur 10 Sende- und Empfangsfrequenzen benötigt werden. Mit einer Frequenz werden 12 Kanäle in Zeitschlitzen übertragen, wobei der Frequenzbereich zwischen 1,881792 GHz und 1,897344 GHz liegt. Das Frequenzraster ist 1,728 MHz. Beim Übertragungsverfahren nach dem DECT-Standard handelt es sich somit um ein sogenanntes Zeit/Frequenzmultiplexverfahren. Diese Zusammenhänge begründen sich in der digitalen Übertragung der Information. Das Sprachsignal wird durch eine Analog/Digital-Wandlung auf eine Datenbitrate von 64 kBit/sec abgetastet. Eine ADPCM-Modulation ermöglicht eine Datenreduktion auf 32 kBit/sec. Im einzelnen wird in den Mobilteilen MT1, MT2 und MT3 das jeweils von einem Mikrofon M kommende anloge Sprachsignal in einem Analog/Digital-Wandler ADW in ein ADPCM-Modulationssignal umgewandelt, das dann einen HF-Sender TX moduliert. Während eines Zeitschlitzes 2 (beim Mobilteil MT1), eines Zeitschlitzes 4 (beim Mobilteil MT2) bzw. eines Zeitschlitzes 8 (beim Mobilteil MT3) wird das modulierte HF-Sendesignal als burstartiger Impuls über eine Antenne A ausgesendet. Von den Antennen A der Mobilteile MT1, MT2 und MT3 während der Zeitschlitze 2, 4 bzw.8 aufgenommene burstartige HF-Empfangssignale werden dort jeweils in einem HF-Empfänger RX demoduliert, dann in einem Digital/Analog-Wandler DAW von der ADPCM-Modulation in ein Analogsignal umgewandelt und zu einem Lautsprecher L geleitet. Die Basisstation BS empfängt die von den Mobilteilen MT1, MT2 und MT3 ausgesendeten HF-Signale mittels ihrer Antenne A mit einem Empfänger RX in den genannten Zeitschlitzen. Das im Zeitschlitz 4 aufgenommene burstartige Signal wird vom HF-Sender TX der Basisstation BS im Zeitschlitz 8 und das im Zeitschlitz 8 aufgenommene burstartige Signal vom HF-Sender TX der Basisstation BS im Zeitschlitz 4 wieder ausgesendet, so daß eine systeminterne Verbindung zwischen den Mobilteilen MT2 und MT3 hergestellt wird. Dagegen baut die dargestellte DECT-Anlage für das Mobilteil MT1 eine externe Verbindung auf. Das im Zeitschlitz 2 am HF-Empfänger RX der Basisstation BS aufgenommene burstartige HF-Signal wird nach einer Demodulation vom ADPCM-Modulationssignal mittels eines Digital/Analog-Wandlers DAW in ein Analogsignal übergeführt, das dann über eine mit einer Nachbildung Nb versehene Gabelschaltung G auf eine daran angeschlossene Amtsleitung AL gelangt. In der entgegengesetzten Richtung kommt vom jeweiligen Gesprächspartner ein Analogsignal über diese Amtsleitung AL zur Gabelschaltung G und von dort zu einem Analog/Digital-Wandler ADW. Das dort entnommene digitale ADPCM-Signal moduliert einen HF-Sender TX und wird als moduliertes HF-Signal als burstartiger Impuls während des Zeitschlitzes 2 über die Antenne A von der Basisstation BS in den Raum abgestrahlt. Das Mobilteil MT1 nimmt mit seiner Antenne A dieses HF-Signal auf und leitet es über den Empfänger RX nach einer Demodulation zum Digital/Analog-Wandler DAW, von dem aus das dann analoge Signal zum Lautsprecher L geführt wird.

Mittels des in Fig. 3 dargestellten Blockschaltbildes läßt sich erkennen, wie die Laufzeit des Echos in einem DECT-System entsteht. Die Systemkomponenten zur Informationsumwandlung und Informationsübertragung benötigen für ihre Aufgaben Zeit. Ein Signal, das vom Mikrofon M eines Mobilteils MT1, MT2, MT3 ausgesendet und an der Gabelschaltung G der Basisstation BS reflektiert wird, erfährt folgende Verzögerungen:

| - Wandlung von analogem Signal in ADPCM-Signal im Mikrofonpfad: | 0,3 ms |
|---|---|
| - Sammeln und Absenden der Information auf einem burstartigen Impuls: | 10 ms |
| - Empfangen der Daten in der Basisstation BS: | 0,36 ms |

Dann erfolgt an der Gabelschaltung G die Überkopplung in den Empfangspfad.

| - erneutes Komprimieren und Senden: | 10 ms |
|---|---|
| - Empfangen im Mobilteil MT1: | 0,36 ms |
| - Wandlung ADPCM-Signal in analoges Signal: | 0,3 ms |

Daraus ergibt sich eine Gesamtverzögerung, die größer als 20 ms ist. Eine Signalverzögerung in dieser Größenordnung ruft eine erhebliche Verschlechterung der Verständigung hervor.

Um die Einflüsse solcher Echo zu kompensieren, ist es bekannt, das Echo durch Echocanceller und/oder Echosuppressoren in der Basisstation BS eines DECT-Systems zu unterdrücken. Dabei werden mit dem Echocanceller das Signal des Mikrofonpfades und das des Lautsprecherpfades aufgenommen und miteinander verglichen. Die Anteile des Mikrofonsignals im Lautsprecherpfad werden dann minimiert. Realisieren läßt sich ein Echocanceller beispielsweise mit einem 32 TAP umfassenden FIR-Filter, das bei einer Abtastrate von 125 $\mu$s Echos mit bis zu 4 ms Zeitverzögerung nach der Gabelschaltung auslöschen kann. Ein Echosuppressor stellt im Lautsprecherpfad eine Dämpfung von ca. 12 dB zur Verfügung, um Echos mit Zeitverzögerungen bis zu 70 ms entfernen zu können. Der Echosuppressor kann allerdings nur dann aktiviert werden, wenn der Gesprächspartner schweigt, da ansonsten dessen Nutzsignal zu schwach wird. Nachteile bei der Realisierung einer derartig arbeitenden Echokompensation sind ein ungleichmäßiger Spracheindruck und ein hoher technischer und damit auch kostenmäßiger Aufwand.

Wie anhand Fig. 4 erläutert wird, ist nun nach der Erfindung prinzipiell eine Möglichkeit geschaffen, die Nachbildung Nb einer Gabelschaltung G an den benutzten Verbindungsweg gut anzupassen. Dazu wird zuerst das Verhalten der jeweils angeschlossenen Amtsleitung AL erkannt und dann eine passende Nachbildung Nb eingestellt. Voraussetzung dazu ist es, zu erkennen, wann der Gesprächspartner gesprächsbereit ist. Hat eine Einrichtung EZ zur Zustandserkennung die Gesprächsbereitschaft des Gesprächspartners erkannt, so werden mit Hilfe einer Frequenzeinspeiseeinrichtung FE diskrete Frequenzen in den Mikrofonpfad MP eingespeist und im Lautsprecherpfad LP mittels einer Meßeinrichtung ME die jeweils reflektierten Anteile gemessen, um Aussagen über die Reflexionen an der Gabelschaltung G machen zu können. Eine künstliche Intelligenz kann diesen Ablauf steuern und die Meßwerte verarbeiten, so daß dann die den jeweils vorliegenden Amtsleitungsverhältnissen impedanzmäßig angepaßte Nachbildung Nb eingestellt werden kann. Für die letztgenannten Funktionen ist im Prinzipschaltbild nach Fig. 4 eine Logik Log für Steuern, Auswerten und Einstellen vorgesehen. Es handelt sich somit um eine adaptive Gabelschaltung.

Bevor die adaptive Gabelschaltung in einer Telefonanlage in Betrieb genommen werden kann, sind noch bestimmte Ablaufvorbereitungen erforderlich. Es sind Nachbildungen zu schaffen und zu dimensionieren, die allen möglichen Verhaltensweisen angeschlossener Amtsleitungen impedanzmäßig über den gesamten in Betracht kommenden Sprachfrequenzbereich weitgehend angeglichen sind. Von den Telefonverwaltungen sind für den Betrieb von Kommunikationsanlagen Vorschriften erlassen, die eine qualitativ gute Kommunikation im Sprachfrequenzbereich, insbesondere zwischen 300 und 3400 Hz, sicherstellen können. Diese Vorschriften müssen meßtechnisch bei der Zulassung einer Telefonanlage nachgewiesen werden. Um eine Aussage über die Beschaffenheit der anzuschließenden Amtsleitungen machen zu können, ist eine Einteilung dieser Übertragungsmedien verfaßt. Dies ist notwendig, weil sich die Leitungslängen bei Amtsanschlüssen unterscheiden können und Kabel mit unterschiedlichen Eigenschaften verwendet werden. Die Vorschriften unterscheiden zwischen verschiedenen Kabelarten und Leitungslängen. Diese sind Gruppen zugeordnet und unterliegen einer unterschiedlichen Bewertung. Für Messungen an diesen Leitungen sind Leitungssimulationen geschaffen worden, die durch Ersatzschaltungen aus R/C-Kombinationen realisiert sind, die entsprechend der zu simulierenden Leitungslänge aus mehreren Grundeinheiten zusammengesetzt sind. Die im Rahmen der Ablaufvorbereitung geschaffenen Nachbildungen sind an die Leitungssimulationen unter Anwendung geeigneter Methoden möglichst genau angeglichen und zeigen bei Anschluß an diese Leitungssimulationen über den geforderten Sprachfrequenzbereich gute Anpassung.

Ein weiterer Schritt im Rahmen der Ablaufvorbereitungen vor Inbetriebnahme der adaptiven Gabelschaltung in einer Telefonanlage besteht nach der Erfindung darin, Referenzrückflußpegel, die mit der festen Nachbildungsimpedanz $Z_{ref}$ als Nachbildung bei einem definierten Sendepegel an jedem von diesen Leitungsabschlüssen entstehen, aufzunehmen und softwaretechnisch abzulegen. Es handelt sich hierbei z.B. um Werte bei den Frequenzen 300 Hz bis 3400 Hz mit einer Schrittweite von z.B. 100 Hz.

Beim Einstellungsvorgang der adaptiven Gabelschaltung während des Betriebs der Telefonanlage werden die Referenzrückflußpegel mit den an der realen Amtsleitung gemessenen Dämpfungen verglichen. Als Nachbildung wird dabei die feste Nachbildungsimpedanz $Z_{ref}$ eingeschaltet.

Im einzelnen gestaltet sich der Einstellungsvorgang der adaptiven Gabelschaltung folgendermaßen:

- Einschalten der festen Nachbildungsimpedanz $Z_{ref}$
- Aufbauen des Gesprächs
- Unterbrechen des Sprechweges
- Einspeisen der Meßfrequenzen in den Sendepfad. Messen der Rückflußpegel im Empfangspfad und Aufnahme der gemessenen Rückflußpegel mit der festen Impedanz $Z_{ref}$ als Nachbildung
- Auswerten der gemessenen Dämpfungen mit Hilfe der Referenzrückflußpegel
- Einstellen der gefundenen Nachbildung
- Einstellen des Sprechweges.

Nach Ausführung dieses Einstellungsablaufs kann das Gespräch mit verbesserter Echokompensation fortgeführt werden, ohne daß weitere Beeinträchtigungen des Sprechweges notwendig sind.

Beim Betrieb dieses Verfahrens werden also Rückflußpegel im Empfangspfad aufgenommen, die entstehen, wenn die feste Nachbildungsimpedanz $Z_{ref}$ an einer reellen Telefonleitung angeschlossen ist. Es werden z.B. 18 Messungen mit den Frequenzen 300 Hz, 400 Hz, 500 Hz, 600 Hz, 800 Hz, 1000 Hz, 1200 Hz, 1400 Hz, 1600 Hz, 1800 Hz, 2000 Hz, 2200 Hz, 2400 Hz, 2600 Hz, 2800 Hz, 3000 Hz, 3200 Hz und 3400 Hz durchgeführt. Mit Hilfe dieser Werte werden die fehlenden Meßwerte für eine Schrittweite von 100 Hz interpoliert. Danach wird die Meßkurve mit einem iterativen Filterverfahren geglättet. Die entstehende Kurve wird mit den bei der Ablaufvorbereitung erstellten Referenzrückflußpegelkurven durch die Ermittlung der kleinsten Fehlerquadrate verglichen und damit ihre Übereinstimmung überprüft. Die z.B. zehn Nachbildungen mit den besten Übereinstimmungen werden auf ihre Absolutdämpfungen hin überprüft. Diese Überprüfung erfolgt, indem z.B. bei den Frequenzen 600 Hz, 1700 Hz und 3000 Hz die Dämpfungen gemessen und summiert werden. Diejenige Nachbildung, die die höchste Dämpfungssumme erreicht, wird als optimale Nachbildung in die Gabelschaltung eingesetzt. Bei diesem beispielhaften Verfahren fallen 48 Messungen an.

Im folgenden sind diese Verfahrensschritte kurz aufgelistet:

- Anschalten der festen Nachbildungsimpedanz $Z_{ref}$ an die Amtsleitung
- Einspeisen der 18 Frequenzen und Messen der Rückflußpegel
- Interpolation der restlichen Rückflußpegelwerte
- Filtern der Meßkurve
- Finden der besten Übereinstimmungen
- Überprüfung der 10 besten Nachbildungen auf Absolutdämpfungen
- Einstellen der optimalen Nachbildung.

Um die Messungen an der benutzten Leitung nach dem Gesprächsaufbau durchführen zu können, muß bei einem selbstinitiierten Verbindungsaufbau vorher erkannt werden, wann der Gesprächspartner seinen Handapparat abgehoben hat. Zur Gewährleistung einer komfortablen Art der Kommunikation läuft die Messung in zweckmäßiger Weise im Zeitraum zwischen dem Abheben des Handapparats des Gesprächspartners und dem Gesprächsbeginn ab, da die Meßfrequenzen im Sprachband liegen und die Unterhaltung stören würden. Bei eingehenden Gesprächen erkennt die Telefonanlage durch den Gabelimpuls den Zeitpunkt des Abhebens des Hörers und kann die entstehende Impulsflanke zum Starten der Messung verwenden.

Was die Frequenzeinspeisung angeht, so sind in modernen Telefonanlagen bereits Sprachschaltungen enthalten, die DTMF-Signale zur Mehrfrequenzwahl in den Signalweg einspeisen. Diese Bausteine sind in der Lage, die benötigten Frequenzen zu erzeugen. Der Pegel des Sendesignals ist gewöhnlich durch den Ausgangsverstärker einstellbar. Seine Verstärkung ist programmtechnisch veränderbar.

Zur Meßwertverarbeitung ist der Steuerungsprozessor einer modernen Telefonanlage verwendbar. Der Prozessor muß für die Anwendung der adaptiven Gabelschaltung nur während der Meß- und Auswertungsphase zur Verfügung stehen. Für die übrige Zeit kann er andere Funktionen übernehmen. Die Referenzdaten können in einem ROM-Speicher abgelegt werden, der ca. 1 kByte Speicherkapazität umfassen sollte.

Es gibt verschiedene zweckmäßige Möglichkeiten, um die Nachbildungen schaltungstechnisch zu realisieren. Es läßt sich dazu beispielsweise eine Bauelementematrix aufbauen. Mittels einer begrenzten Anzahl diskreter Bauteile, die in einer Matrix angeordnet sind und miteinander verschaltet werden können, sind die Nachbildungen mit Hilfe von Reihen- und Parallelschaltung zusammenzusetzen. Die Nachbildungen lassen sich aber z.B. auch mit einem sogenannten Switched-Capacitor-Filter realisieren. Ein Switched-Capacitor-Filter kann reelle Widerstände durch Be- und Entladung eines Kondensators darstellen. Der gewünschte Widerstandswert hängt von der Schaltfrequenz ab, mit der zwischen Laden und Entladen umgeschaltet wird.

**Patentansprüche**

1. Verfahren zur Echokompensation in Telefonanlagen, in denen zur Überleitung zwischen einem Vierdraht-Sende/Empfangsweg und einem Zweidraht-Amtsleitungsweg eine Gabelschaltung mit einer impedanzmäßigen Nachbildung der angeschalteten Amtsleitung vorgesehen ist,
   **dadurch gekennzeichnet,**
   daß in der Gabelschaltung (G) zunächst eine Nachbildung mit einer festen Referenzimpedanz ($Z_{ref}$) eingeschaltet wird, daß nach vollständiger Durchschaltung einer Verbindung, d.h. bei Gesprächsbereitschaft des Gesprächspartners, in den Sendeweg Signale mit diskreten, innerhalb des Sprachfrequenzbereichs insbesondere zwischen ca. 300 und 3400 Hz liegenden Frequenzen eingespeist werden, daß im Empfangsweg der reflektierte Anteil dieser Signale gemessen wird und daraus Rückflußpegel mit der festen Referenzimpedanz ($Z_{ref}$) als Nachbildung ermittelt werden, daß die ermittelten Rückflußpegel mit den gleichen diskreten Frequenzen zugeordneten Referenzrückflußpegeln verglichen werden, die während einer vorangegangenen Ablaufvorbereitungsphase mit der festen Referenzimpedanz ($Z_{ref}$) als Nachbildung in der Gabelschaltung und bei definiertem Sendepegel aufgenommen und abgelegt worden sind, wobei bei diesem ablaufvorbereitenden Aufnahmevorgang eine Vielzahl von impedanzmäßig unterschiedlich dimensionierten Referenz-Leitungsnachbildungen vorgegeben ist, die für den Betrieb an Amtsleitungen bei unterschiedlichen Leitungsverhältnissen eine gute Anpassung zeigen, und daß als Nachbildung (Nb) in der Gabelschaltung (G) schließlich diejenige der Referenz-Leitungsnachbildungen eingestellt wird, die im betrachteten Frequenzbereich hinsichtlich ihrer abgelegten Referenzrückflußpegel insgesamt am besten mit den ermittelten Rückflußpegeln übereinstimmt.

2. Verfahren nach Anspruch 1,
   **dadurch gekennzeichnet,**
   daß aus den für die diskreten Frequenzen ermittelten Rückflußpegeln eine geglättete Rückflußpegel-Meßkurve gebildet wird, die mit Referenzrückflußpegelkurven der Referenz-Leitungsnachbildungen verglichen wird.

3. Verfahren nach Anspruch 1 oder 2,
   **dadurch gekennzeichnet,**
   daß die Referenzrückflußpegel bei Frequenzen im Sprachfrequenzbereich, z.B. zwischen 300 und 3400 Hz, aufgenommen werden, die der Reihe nach eine gleiche Schrittweite, z.B. 100 Hz, voneinander haben, daß die beim Betrieb im Empfangspfad zu ermittelnden Rückflußpegel bei einer geringeren Anzahl dieser Frequenzen gemessen werden, und daß die Werte für die bei der Messung fehlenden Rückflußpegel interpoliert werden.

4. Verfahren nach einem der vorhergehenden Ansprüche,
   **dadurch gekennzeichnet,**
   daß zur Glättung der Meßkurve der ermittelten Rückflußpegel ein iteratives Filterverfahren verwendet wird.

5. Verfahren nach einem der Ansprüche 2 bis 4,
   **dadurch gekennzeichnet,**
   daß die geglättete Rückflußpegel-Meßkurve mit den Referenzrückflußpegelkurven durch Ermittlung der kleinsten Fehlerquadrate verglichen und damit ihre Übereinstimmung überprüft wird.

6. Verfahren nach einem der Ansprüche 2 bis 5,
   **dadurch gekennzeichnet,**
   daß eine bestimmte Anzahl von Nachbildungen, deren Referenzrückflußpegelkurven die besten Übereinstimmungen mit der geglätteten Rückflußpegel-Meßkurve aufweisen, hinsichtlich ihrer Absolutdämpfungen überprüft werden, daß diese Überprüfung derart erfolgt, daß bei einigen festgelegten Frequenzen, z.B. bei 600 Hz, 1700 Hz und 3000 Hz, die Dämpfungen gemessen und summiert werden, und daß diejenige dieser Nachbildungen, welche die höchste Dämpfungssumme erreicht, als optimale Nachbildung (Nb) in der Gabelschaltung (G) eingestellt wird.

7. Verfahren nach einem der vorhergehenden Ansprüche,
   **dadurch gekennzeichnet,**
   daß die Referenzrückflußpegel bzw. die Referenzrückflußpegelkurven softwaretechnisch abgelegt werden.

8. Verfahren nach einem der vorhergehenden Ansprüche,
**dadurch gekennzeichnet,**
daß bei einem selbstinitiierten Verbindungsaufbau die Messungen im Zeitraum zwischen dem Abheben des Handapparats des Gesprächspartners und dem Gesprächsbeginn ablaufen.

9. Verfahren nach einem der Ansprüche 1 bis 7,
**dadurch gekennzeichnet,**
daß bei Initiierung des Verbindungsaufbaus von seiten eines Gesprächspartners die eigene Telefonanlage durch den Gabelimpuls den Zeitpunkt des Abhebens des Hörers erkennt und die entstehende Impulsflanke zum Starten der Messung verwendet.

10. Verfahren nach einem der vorhergehenden Ansprüche,
**gekennzeichnet durch** die Anwendung in Basisstationen (BS) von schnurlosen Telefonanlagen.

11. Verfahren nach Anspruch 10,
**gekennzeichnet durch** die Anwendung in Basisstationen (BS) von schnurlosen Telefonanlagen mit digitaler Signalübertragung zwischen Basisstation und Mobilteilen (MT1, MT2, MT3).

12. Verfahren nach Anspruch 11,
**dadurch gekennzeichnet,**
daß die schnurlose Telefonanlage eine sogenannte DECT(Digital European Cordless Telecommunication)-Anlage ist.

13. Einrichtung zur Echokompensation in Telefonanlagen, in denen zur Überleitung zwischen einem Vierdraht-Sende/Empfangsweg und einem Zweidraht-Amtsleitungsweg eine Gabelschaltung mit einer impedanzmäßigen Nachbildung der angeschalteten Amtsleitung vorgesehen ist,
**dadurch gekennzeichnet,**
daß in der Gabelschaltung (G) eine Nachbildung mit einer festen Referenzimpedanz ($Z_{ref}$) vorgesehen ist, daß die Gabelschaltung außerdem eine logikgesteuerte Zustandserkennungseinrichtung (EZ) enthält, die nach vollständiger Durchschaltung einer Verbindung, d.h. bei Gesprächsbereitschaft des Gesprächspartners, die Durchführung von Messungen freigibt, daß darüber hinaus in der Gabelschaltung eine logikgesteuerte Frequenzeinspeisungseinrichtung (FE) vorgesehen ist, die in den Sendeweg Signale mit diskreten, innerhalb des Sprachfrequenzbereichs insbesondere zwischen ca. 300 und 3400 Hz liegenden Frequenzen einspeist, daß die Gabelschaltung ferner eine logikgesteuerte Meßwertaufnahmeeinrichtung (ME) aufweist, mittels welcher im Empfangsweg die reflektierten Anteile dieser Signale gemessen und daraus Rückflußpegel mit der festen Referenzimpedanz ($Z_{ref}$) als Nachbildung ermittelt werden, daß darüber hinaus eine logikgesteuerte Meßwertverarbeitungseinrichtung vorgesehen ist, in welcher die ermittelten Rückflußpegel mit den gleichen diskreten Frequenzen zugeordneten Referenzrückflußpegeln verglichen werden, die während einer vorangegangenen Ablaufvorbereitungsphase mit der Referenzimpedanz (Zref) als Nachbildung in der Gabelschaltung und bei definiertem Sendepegel aufgenommen und abgelegt worden sind, wobei bei diesem ablaufvorbereitenden Aufnahmevorgang eine Vielzahl von impedanzmäßig unterschiedlich dimensionierten Referenz-Leitungsnachbildungen vorgegeben ist, die für den Betrieb an Amtsleitungen bei unterschiedlichen Leitungsverhältnissen eine gute Anpassung zeigen, und daß eine ebenfalls logikgesteuerte Einstelleinrichtung vorgesehen ist, die als Nachbildung (Nb) in der Gabelschaltung (G) diejenige der Referenz-Leitungsnachbildungen einstellt, die im betrachteten Frequenzbereich hinsichtlich der abgelegten Referenzrückflußpegel insgesamt am besten mit den ermittelten Rückflußpegeln übereinstimmt.

14. Einrichtung nach Anspruch 13,
**dadurch gekennzeichnet,**
daß die abgelegten Referenz-Leitungsnachbildungen in Form einer Bauelemente-Matrix aufgebaut sind, wobei diese Nachbildungen mittels einer begrenzten Anzahl diskreter Bauteile, die in einer Matrix angeordnet sind und miteinander verschaltet werden können, mit Hilfe von Reihen- und Parallelschaltungen zusammengesetzt sind.

15. Einrichtung nach Anspruch 13,
**dadurch gekennzeichnet,**
daß die abgelegten Referenz-Nachbildungen durch ein sogenanntes Switched-Capacitor-Filter realisiert sind, das reelle Widerstände durch Be- und Entladung eines Kondensators darstellt, wobei der gewünschte Widerstandswert von der Schaltfrequenz abhängt, mit der zwischen Laden und Entladen umgeschaltet wird.

16. Einrichtung nach einem der Ansprüche 13 bis 15,

**dadurch gekennzeichnet,**
daß als Frequenzeinspeisungsvorrichtung (FE) eine in einer Telefonanlage bereits vorhandene Sprachschaltung verwendet wird, die DTMF-Signale zur Mehrfrequenzwahl in den Signalweg einspeist.

17. Einrichtung nach einem der Ansprüche 13 bis 16,
**dadurch gekennzeichnet,**
daß als Meßwertverarbeitungseinrichtung der bereits vorhandene Steuerungsprozessor einer Telefonanlage verwendet wird.

18. Einrichtung nach Anspruch 17,
**dadurch gekennzeichnet,**
daß Referenzdaten für die Meßwertverarbeitung in einem ROM-Speicher abgelegt sind.

FIG 1

FIG 2

$$R1 = 220\,\Omega\;;\;R2 = 820\,\Omega\;;\;C2 = 115\,nF$$

FIG 4

EP 0 777 340 A2

# FIG 3